# EUROPÄISCHE PATENTSCHRIFT

(11) **EP 2 686 750 B1**
(45) Veröffentlichungstag und Bekanntmachung des Hinweises auf die Patenterteilung: **31.10.2018**
(21) Anmeldenummer: 12715861.6
(22) Anmeldetag: 16.03.2012
(51) Int. Cl.: G06F 1/16

(54) **VORRICHTUNG ZUM BEFESTIGEN EINES TABLET-COMPUTERS AN EINER VESA-HALTERUNG**
DEVICE FOR FASTENING A TABLET COMPUTER TO A VESA MOUNT
DISPOSITIF POUR FIXER UNE TABLETTE ÉLECTRONIQUE À UN SUPPORT VESA

(30) Priorität: 16.03.2011 DE 102011001324
(43) Veröffentlichungstag der Anmeldung: 22.01.2014
(73) Patentinhaber: Wincor Nixdorf International GmbH, 33106 Paderborn (DE)
(72) Erfinder: BAITZ, Günter, 13629 Berlin (DE)
(86) Internationale Anmeldenummer: PCT/EP2012/054673
(87) Internationale Veröffentlichungsnummer: WO 2012/123574

(56) Entgegenhaltungen:
- EP-B1- 1 208 620
- US-A1- 2004 257 753
- US-A1- 2007 097 617
- US-A1- 2008 232 044

## Beschreibung

Die Erfindung betrifft eine Vorrichtung zum Befestigen eines Tablet-Computers an einer standardisierten Halterung für Flachbildschirme. Die Erfindung wird insbesondere als Bestandteil von Kassensystemen eingesetzt.

Bekannte Kassensysteme verfügen über Flachbildschirme, durch die einer Bedienperson des Kassensystems Informationen angezeigt werden können. Solche Flachbildschirme sind in der Regel über standardisierte Halterungen, insbesondere sogenannte VESA-Halterungen, an Haltearmen befestigt. Die VESA-Halterungen verfügen über eine standardisierte Anzahl an Bohrungen, die standardisierte, voreingestellte Abstände zueinander haben. Ebenso verfügen die Flachbildschirme in der Regel über Bohrungen mit Innengewinde, die ebenfalls diese standardisierten Abstände zueinander haben, so dass die Flachbildschirme über entsprechende Schrauben auf einfache Weise an der VESA-Halterung befestigt werden können.

Um einen kompakten, einfachen Aufbau zu erzielen, besteht eine der Erfindung zugrundeliegende Idee darin, bei modernen Kassensystemen die Displays und die zur Eingabe und Steuerung der Kassensysteme notwendigen Eingabegeräte durch kompakte Tablet-Computer zu ersetzen. Solche Tablet-Computer verfügen allerdings nicht über standardisierte Bohrungen auf ihrer Rückseite, über die die Tablet-Computer an VESA-Halterungen befestigt werden können. Somit ist es bis jetzt nur möglich, die Tablet-Computer separat zu dem bestehenden Displays anzuschließen und als lose angeschlossenes Peripheriegerät zu betreiben. Problematisch hieran ist, dass hierdurch die Flachbildschirme nicht durch den Tablet-Computer ersetzt werden können, sondern beide parallel betrieben werden müssen, was mit hohen Kosten verbunden ist.

Aus dem Dokument US 2007/0097617 A1 ist eine Vorrichtung zum Befestigen eines Flachbildschirms an einer Vesa-Halterung bekannt, bei der ein Halterungsadapter auf den Bildschirmadapter aufgesteckt wird.

Das Dokument US 2004/0257753 A1 beschreibt eine Halterung für Tablet-Computer. Das Dokument EP 1 208 620 offenbart eine Halterung für einen Flachbildschirm.

Es ist Aufgabe der Erfindung, eine Vorrichtung zur Befestigung von Tablet-Computern an standardisierten Halterungen für Flachbildschirme anzugeben, mit deren Hilfe der Tablet-Computer auf einfache Weise an der standardisierten Halterung befestigbar ist.

Diese Aufgabe wird durch eine Vorrichtung mit den Merkmalen des Anspruchs 1 gelöst. Vorteilhafte Weiterbildungen der Erfindung sind in den abhängigen Ansprüchen angegeben.

Erfindungsgemäß umfasst die Vorrichtung zwei Adaptereinheiten, wobei eine erste Adaptereinheit derart ausgebildet ist, dass sie fest mit der Halterung verbindbar ist, und die zweite Adaptereinheit derart ausgebildet ist, dass sie fest mit dem Tablet-Computer verbindbar ist. Die erste Adaptereinheit umfasst eine Aufnahmeeinheit, in der die zweite Adaptereinheit zum Herstellen einer lös- und wiederherstellbaren Verbindung zwischen der ersten und der zweiten Adaptereinheit zumindest teilweise aufnehmbar ist.

Durch die beiden Adaptereinheiten wird auf einfache Weise erreicht, dass der Tablet-Computer an der standardisierten Halterung befestigt werden kann. Durch das zumindest teilweise Aufnehmen der zweiten Adaptereinheit in der Aufnahmeeinheit der ersten Adaptereinheit wird eine lös- und wiederherstellbare Verbindung erreicht, so dass der Tablet-Computer auf einfache Weise auch wieder von der standardisierten Halterung abgenommen werden kann. Insbesondere bleibt somit der Vorteil eines Tablet-Computers, nämlich dass dieser portabel und einfach zu handhaben ist, erhalten.

Unter einem Tablet-Computer wird insbesondere jede tragbare, flache Datenverarbeitungseinheit verstanden, die vollständig in einem Gehäuse mit einem berührungssensitiven Bildschirm untergebracht ist und per Finger und/oder per Stift bedient werden kann. Solche Tablet-Computer werden häufig auch als Tablet-PC und Notepad bezeichnet.

Die Aufnahmeeinheit ist insbesondere in Form eines Aufnahmefachs ausgebildet, in das die zweite Adaptereinheit zum Herstellen der lös- und wiederherstellbaren Verbindung zumindest teilweise einschiebbar ist. Somit kann die Verbindung zwischen den Adaptereinheiten auf einfache Weise durch das Einschieben hergestellt und ebenso einfach durch das wieder hinausschieben der zweiten Adaptereinheit aus dem Aufnahmefach gelöst werden. Somit wird eine einfache Handhabung und trotzdem eine sichere Befestigung gewährleistet.

Es ist vorteilhaft, wenn das Aufnahmefach ein erstes Begrenzungselement umfasst, auf dem die zweite Adaptereinheit beim Einschieben in das Aufnahmefach zumindest teilweise gleitet, und wenn das Aufnahmefach ein zweites, ein drittes und ein viertes Begrenzungselement umfasst, die an drei verschiedenen Seiten des ersten Begrenzungselementes angeordnet sind. Die vier Begrenzungselemente begrenzen einen Aufnahmebereich, in dem die zweite Adaptereinheit zumindest teilweise aufgenommen ist, wenn sie in das Aufnahmefach eingeschoben ist. Ferner umfasst das Aufnahmefach mindestens ein Rückhalteelement zum Verhindern des Herausfallens der zweiten Adaptereinheit aus dem Aufnahmebereich. Somit ist ein einfach ausgebildetes Aufnahmefach erreicht, in das die zweite Adaptereinheit einfach eingeschoben werden kann.

Das zweite, das dritte und das vierte Begrenzungselement sind vorzugsweise wandartig ausgebildet und jeweils orthogonal zum ersten Begrenzungselement angeordnet. Ferner sind das zweite und das vierte Begrenzungselement jeweils orthogonal zum dritten Begrenzungselement und parallel zueinander angeordnet. Somit wird durch die vier Begrenzungselemente ein kastenförmiger Aufnahmebereich begrenzt, der eine seitliche Öffnung aufweist, in die der zweite Adapter zumindest teilweise eingeschoben wird. Die dem ersten Begrenzungselement gegenüberliegende offene Seite des Kastens wird durch das Rückhalteelement zumindest soweit verschlossen, dass die zweite Adaptereinheit nicht rausfallen kann.

Die zweite Adaptereinheit hat insbesondere eine Aussparung, in die das Rückhalteelement eingreift, wenn die zweite Adaptereinheit in das Aufnahmefach eingeschoben wird. Somit wird eine sichere Positionierung der zweiten Adaptereinheit in dem Aufnahmefach und somit eine sichere Lagerung der zweiten Adaptereinheit an der ersten Adaptereinheit gewährleistet. Bei einer besonders bevorzugten Ausführungsform der Erfindung umfasst das Aufnahmefach zwei Rückhalteelemente, die an gegenüberliegenden Seiten des Aufnahmefaches angeordnet sind und jeweils in eine entsprechend komplementär ausgebildete Aussparung der zweiten Adaptereinheit eingreifen. Somit wird die zweite Adaptereinheit beidseitig gehalten, so dass eine noch höhere Sicherung gegen das Herausfallen erreicht wird. Die beiden Rückhalteelemente sind insbesondere an dem zweiten und dem vierten Begrenzungselement angeordnet und begrenzen zusammen mit den vier Begrenzungselementen das Aufnahmefach.

Das erste Begrenzungselement umfasst vorzugsweise mindestens ein längliches Auflageelement, auf dem die zweite Adaptereinheit beim Einschieben gleitet. Insbesondere sind mehrere längliche Auflageelemente vorgesehen. Somit werden ein besonders leichtgängiges Einschieben der zweiten Adaptereinheit und auch wieder ein besonders leichtes Entnehmen der zweiten Adaptereinheit in bzw. aus dem Aufnahmefach erreicht.

Die Aufnahmeeinheit der ersten Adaptereinheit hat insbesondere einen ersten Steckverbinder und die zweite Adaptereinheit einen hierzu komplementär ausgebildeten zweiten Steckverbinder. Wenn die zweite Adaptereinheit in der Aufnahmeeinheit aufgenommen ist, ist eine Steckverbindung zwischen den beiden Steckverbindern hergestellt. Über diese Steckverbindung können Daten zwischen dem an der zweiten Adaptereinheit angeschlossenen Tablet-Computer und weiteren an der ersten Adaptereinheit angeschlossenen Peripheriegeräten übertragen werden. Des Weiteren kann über diese Steckverbindung eine Stromversorgung des Tablet-Computers erfolgen. Bei einer besonders bevorzugten Ausführungsform der Erfindung umfassen sowohl die erste Adaptereinheit als auch die zweite Adaptereinheit jeweils mehrere Steckverbinder.

Die zweite Adaptereinheit ist insbesondere so ausgebildet, dass sie derart mit dem Tablet-Computer verbindbar ist, dass Daten und/oder elektrische Energie von dem zweiten Steckverbinder an den Tablet-Computer übertragen werden kann. Hierzu umfasst die zweite Adaptereinheit insbesondere einen weiteren Steckverbinder, der mit werkseitig an dem Tablet-Computer vorhandenen Steckverbindern in Eingriff gebracht werden kann, um eine Steckverbindung hierzwischen herzustellen.

Die erste Adaptereinheit hat mindestens eine mit dem ersten Steckverbinder verbundenen dritten Steckverbinder zum Anschließen eines Netzkabels zur Stromversorgung des Tablet-Computers und/oder zum Anschließen eines Peripheriegeräts an den Tablet-Computer. Hierdurch wird erreicht, dass die Stromversorgung bzw. die Peripheriegeräte nicht direkt an den Tablet-Computer angeschlossen werden müssen, sondern dass das Anschließen der Peripheriegeräte an die erste Adaptereinheit erfolgen kann. Somit kann der Tablet-Computer durch ein Lösen der lös- und wiederherstellbaren Verbindung zwischen der ersten und der zweiten Adaptereinheit auf einfache Weise von der Halterung gelöst werden, ohne dass hierbei die ganzen Peripheriegeräte und die Stromversorgung auch vom Tablet-Computer gelöst werden müssen. Wird der Tablet-Computer durch das Schieben der zweiten Adaptereinheit in die Aufnahmeeinheit wieder an der Halterung befestigt, so müssen die Peripheriegeräte und die Stromversorgung nicht neu angeschlossen werden, sondern die entsprechenden Verbindungen werden über die Steckverbindung zwischen dem ersten und zweiten Steckverbinder automatisch hergestellt.

Im Aufnahmefach der ersten Adaptereinheit ist vorzugsweise ein Stift angeordnet, der in eine komplementär zu ihm ausgebildete Öffnung der zweiten Adaptereinheit eingreift, während die zweite Adaptereinheit in das Aufnahmefach eingeschoben wird. Durch den Eingriff des Stiftes in die Öffnung wird erreicht, dass beim Einschieben der Adaptereinheit in das Aufnahmefach die zweite Adaptereinheit derart geführt wird, dass, wenn die zweite Adaptereinheit vollständig eingeschoben ist, die Steckverbindung zwischen dem ersten und dem zweiten Steckverbinder sicher hergestellt wird. Insbesondere werden somit Beschädigungen der Steckverbinder vorgebeugt.

Bei einer bevorzugten Ausführungsform der Erfindung sind zwei Stifte vorgesehen, die in jeweils eine Öffnung der zweiten Adaptereinheit eingreifen. Somit wird eine noch sicherere Führung und Positionierung der zweiten Adaptereinheit innerhalb des Aufnahmefaches erreicht. Die beiden Stifte sind insbesondere an dem dritten Begrenzungselement derart angeordnet, dass die beiden Stifte in den durch die vier Begrenzungselemente begrenzten Aufnahmebereich des Aufnahmefaches hineinragen.

Bei einer besonders bevorzugten Ausführungsform der Erfindung weist der Stift eine, insbesondere umlaufende, Nut auf. Die zweite Adaptereinheit hat ein Eingriffselement, das in einem ersten Betriebszustand in die Nut eingreift und das in einem zweiten Betriebszustand außerhalb der Nut angeordnet ist. Somit ist im ersten Betriebszustand aufgrund des Eingriffes des Eingriffselements in die Nut ein Herausschieben der zweiten Adaptereinheit aus dem Aufnahmefach nicht möglich. Im zweiten Betriebszustand dahingegen kann die zweite Adaptereinheit von der ersten Adaptereinheit gelöst werden. Es ist insbesondere eine Verstelleinheit vorgesehen, mit deren Hilfe das Eingriffselement zwischen den beiden Betriebspositionen verstellbar ist. Alternativ ist es möglich, dass das Sicherungselement durch eine Feder in einem der beiden Betriebszustände vorgespannt ist und über die Verstelleinheit nur in den entsprechend anderen Betriebszustand entgegen der Federkraft verstellt wird. Die Verstelleinheit kann insbesondere ein manuell betätigbares Betätigungselement umfassen.

Bei einer alternativen Ausführungsform der Erfindung kann die zweite Adaptereinheit auch über andere Sicherungselemente gegen ein Entfernen aus der ersten Adaptereinheit gesichert werden. Insbesondere kann mindestens ein Magnet vorgesehen sein, der in einem aktivierten Zustand die zweite Adaptereinheit in dem Aufnahmebereich festhält und in einem deaktivierten Zustand das Entfernen der zweiten Adaptereinheit aus dem Aufnahmefach erlaubt.

Die zweite Adaptereinheit weist insbesondere vier Bohrungen auf, über die die zweite Adaptereinheit mittels Schrauben an dem Tablet-Computer befestigbar ist. Alternativ können auch mehr oder weniger Bohrungen zur Befestigung der zweiten Adaptereinheit an dem Tablet-Computer vorgesehen sein. Insbesondere können auch nur zwei Bohrungen vorgesehen sein.

Bei einer besonders bevorzugten Ausführungsform der Erfindung weist die erste Adaptereinheit mindestens vier Bohrungen auf, die jeweils ein Innengewinde haben. Über die Bohrungen kann die erste Adaptereinheit auf einfache Weise an die standardisierte Halterung für Flachbildschirme angeschraubt werden. Hierbei sind die Aufnahmeeinheit insbesondere an einer ersten Seite der ersten Adaptereinheit und die Bohrungen an einer der ersten Seite gegenüberliegenden zweiten Seite der ersten Adaptereinheit angeordnet.

Die Bohrungen sind insbesondere derart ausgebildet und angeordnet, dass mit ihrer Hilfe die erste Adaptereinheit an einer standardisierten VESA-Halterung befestigt werden kann. Hierfür sind die Innengewinde insbesondere als M4, M5, M6 oder M8 Innengewinde mit jeweils einer Gewindelänge von etwa 10 mm ausgebildet. Die vier Bohrungen sind derart angeordnet, dass sie die Ecken eines Rechtecks bilden, wobei das Rechteck vorzugsweise die Abmessungen 75 x 75 mm, 100 x 100 mm, 200 x 100 mm, 200 x 200 mm, 400 x 200 mm, 400 x 400 mm, 600 x 200 mm, 600 x 400 mm oder 800 x 400 mm hat. Bei einer besonders bevorzugten Ausführungsform der Erfindung umfasst die erste Adaptereinheit acht Bohrungen, die insbesondere derart ausgebildet sind, dass über jeweils vier dieser Bohrungen die Adaptereinheit an einer VESA-Halterung befestigt werden kann. Hierzu bilden vorzugsweise jeweils vier der acht Bohrungen ein Rechteck, das vorzugsweise eine der zuvor genannten Abmessungen aufweist.

Ein weiterer Aspekt der Erfindung betrifft eine Anordnung zum Anzeigen von Informationen, die eine standardisierte Halterung zur Befestigung von Flachbildschirmen, einen Tablet-Computer und zwei Adaptereinheiten umfasst, wobei eine erste Adaptereinheit fest mit der Halterung und eine zweite Adaptereinheit fest mit dem Tablet-Computer verbunden ist. Die erste Adaptereinheit umfasst eine Aufnahmeeinheit, in der die zweite Adaptereinheit zum Herstellen einer lös- und wieder herstellbaren Verbindung zwischen der ersten und der zweiten Adaptereinheit zumindest teilweise aufnehmbar ist. Durch die Adaptereinheit wird erreicht, dass der Tablet-Computer auf einfache Weise an der Halterung befestigt und wieder von dieser entfernt werden kann.

Bei der Anordnung handelt es sich insbesondere um ein Kassensystem, bei dem durch den Tablet-Computer ein Flachbildschirm und/oder Eingabegeräte, beispielsweise eine Tastatur, ersetzt werden können. Insbesondere kann der Tablet-Computer durch die beschriebene Adaptereinheit auf einfache Weise aus dem Kassensystem entnommen werden, wenn die Kasse nicht mit einer Kassiererin bzw. einem Kassierer besetzt ist.

Die erste Adaptereinheit und die zweite Adaptereinheit der Anordnung können mit den zuvor für die erste bzw. zweite Adaptereinheit in Zusammenhang mit der Vorrichtung beschriebenen Merkmalen weitergebildet werden.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische, perspektivische Darstellung einer Vorrichtung zum Befestigen eines Tablet-Computers an eine standardisierte Halterung für Flachbildschirme in einem gelösten Zustand;
- Figur 2: eine schematische, perspektivische Darstellung einer ersten Adaptereinheit der Vorrichtung nach Figur 1 mit Blick auf eine Vorderseite;
- Figur 3: eine schematische, perspektivische Darstellung der ersten Adaptereinheit nach Figur 2 mit Blick auf eine Rückseite;
- Figur 4: eine schematische, perspektivische Darstellung einer zweiten Adaptereinheit der Vorrichtung nach Figur 1;
- Figur 5: eine schematische, perspektivische Darstellung der Vorrichtung nach Figur 1 in einem verbundenen Zustand;
- Figur 6: eine schematische, perspektivische Darstellung der zweiten Adaptereinheit nach Figur 4 und eines an ihr befestigten Tablet-Computers;
- Figur 7: eine schematische, perspektivische Darstellung einer standardisierten Halterung für Flachbildschirme und der an dieser befestigten ersten Adaptereinheit nach den Figuren 2 und 3;
- Figur 8: eine schematische, perspektivische Darstellung einer Anordnung zur Anzeige von Informationen gemäß einer ersten Ausführungsform; und
- Figur 9: eine schematische, perspektivische Darstellung einer Anordnung zur Anzeige von Informationen gemäß einer zweiten Ausführungsform.

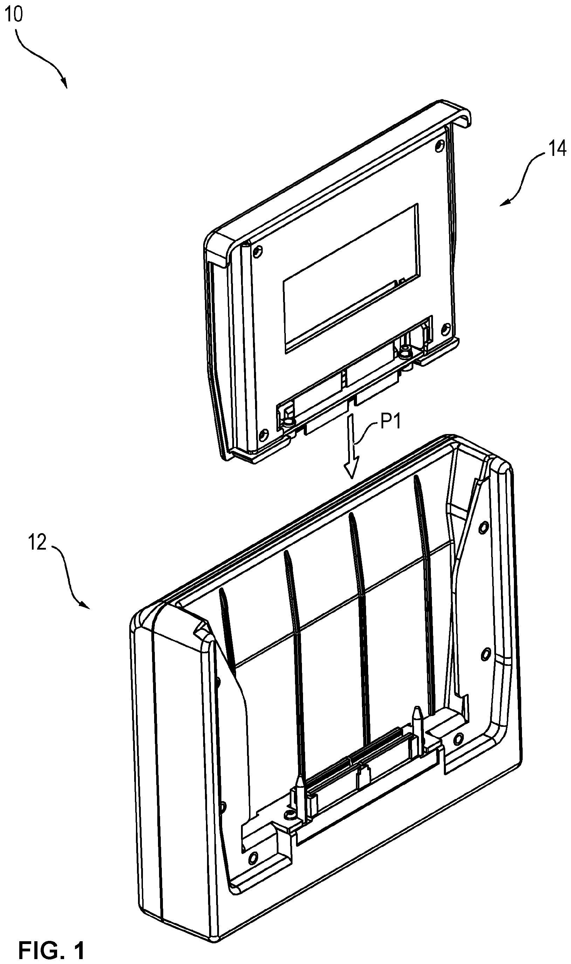

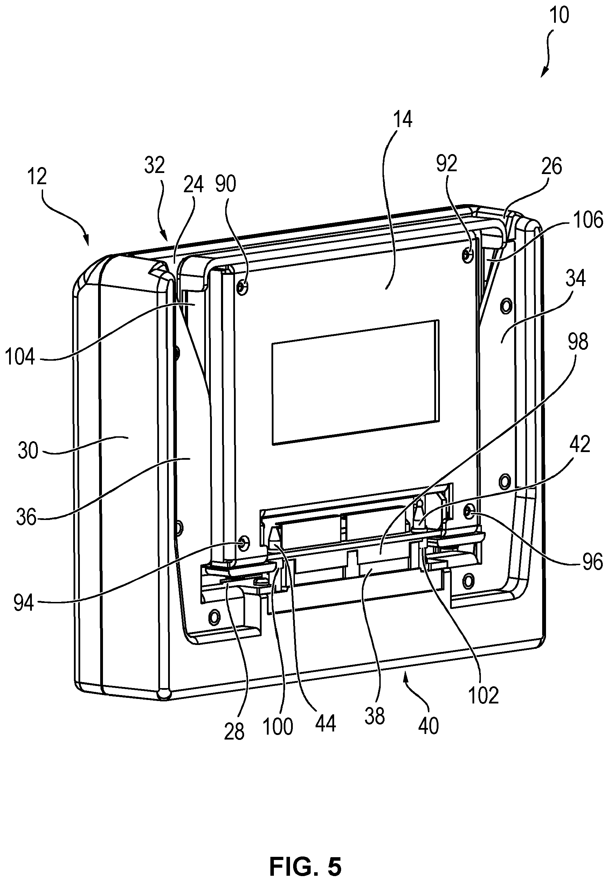

In Figur 1 ist eine schematische, perspektivische Darstellung einer Vorrichtung 10 zum Befestigen eines Tablet-Computers 18 an einer standardisierten Halterung 20, 22 für Flachbildschirme, insbesondere einer VESA-Halterung 20, 22, dargestellt. Die Vorrichtung 10 umfasst eine erste Adaptereinheit 12 und eine zweite Adaptereinheit 14, wobei in Figur 1 die beiden Adaptereinheiten 12, 14 in einem voneinander getrennten Zustand dargestellt sind. In Figur 5 ist die Vorrichtung 10 gezeigt, wenn die Adaptereinheiten 12, 14 über eine lös- und wiederherstellbare Verbindung miteinander verbunden sind. Hierzu kann, wie im Folgenden noch näher beschrieben wird, die zweite Adaptereinheit 14 in Richtung des Pfeils P1 in einem Aufnahmebereich der ersten Adaptereinheit 12 zumindest teilweise eingeschoben werden, so dass die zweite Adaptereinheit 14 an der ersten Adaptereinheit 12 befestigt ist.

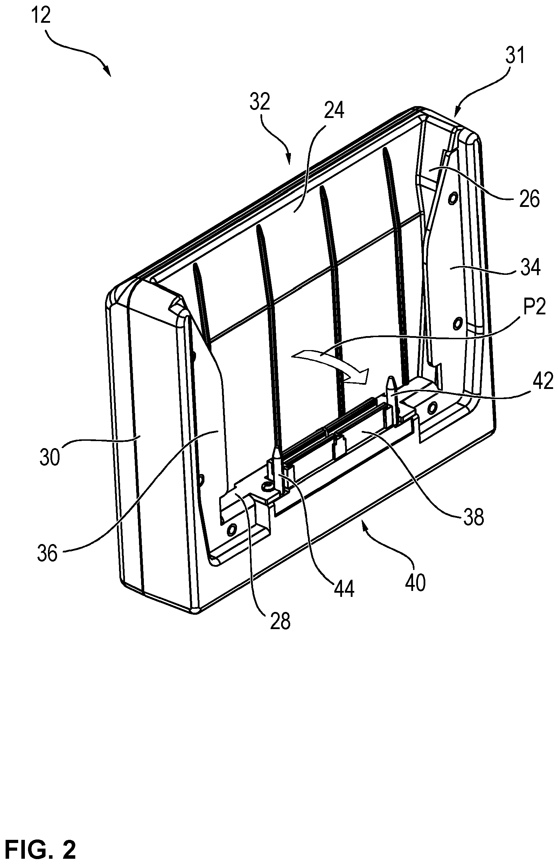

In Figur 2 ist eine schematische, perspektivische Darstellung der ersten Adaptereinheit 12 mit Blick auf eine Vorderseite gezeigt. Die erste Adaptereinheit 12 umfasst vier Begrenzungselemente 24 bis 30, durch die ein Aufnahmebereich 31 eines Aufnahmefaches 32 der ersten Adaptereinheit 12 begrenzt wird. Zum Verbinden der ersten Adaptereinheit 12 und der zweiten Adaptereinheit 14 ist die zweite Adaptereinheit 14 zumindest teilweise in diesem Aufnahmebereich 31 des Aufnahmefaches 32 aufgenommen. Ferner wird der Aufnahmebereich 31 durch zwei an den Begrenzungselementen 26 und 30 angeordnete Rückhalteelemente 34, 36 begrenzt, die ein Hinausfallen der zweiten Adaptereinheit 14 in Richtung des Pfeils P2 verhindern.

An dem dritten Begrenzungselement 28 sind mehrere Steckverbinder vorgesehen, von denen einer beispielhaft mit dem Bezugszeichen 38 bezeichnet ist. Die Steckverbinder 38 sind mit weiteren an der dem Aufnahmebereich 31 abgewandten Seite 40 angeordneten, in Figur 2 nicht sichtbaren, Steckverbindern verbunden. Über diese weiteren Steckverbinder kann eine Steckverbindung zu Peripheriegeräten, die an dem Tablet-Computer 18 angeschlossen werden sollen, hergestellt werden. Ferner kann über diese weiteren Steckverbinder und die Steckverbinder 38 auch die Stromversorgung des Tablet-Computers 18 erfolgen.

Darüber hinaus sind in dem Aufnahmefach 32 zwei Stifte 42, 44 angeordnet. Bei einer alternativen Ausführungsform der Erfindung kann auch nur ein Stift 42, 44 vorgesehen sein. Ebenso können auch mehr als zwei Stifte 42, 44 im Aufnahmefach 32 angeordnet sein.

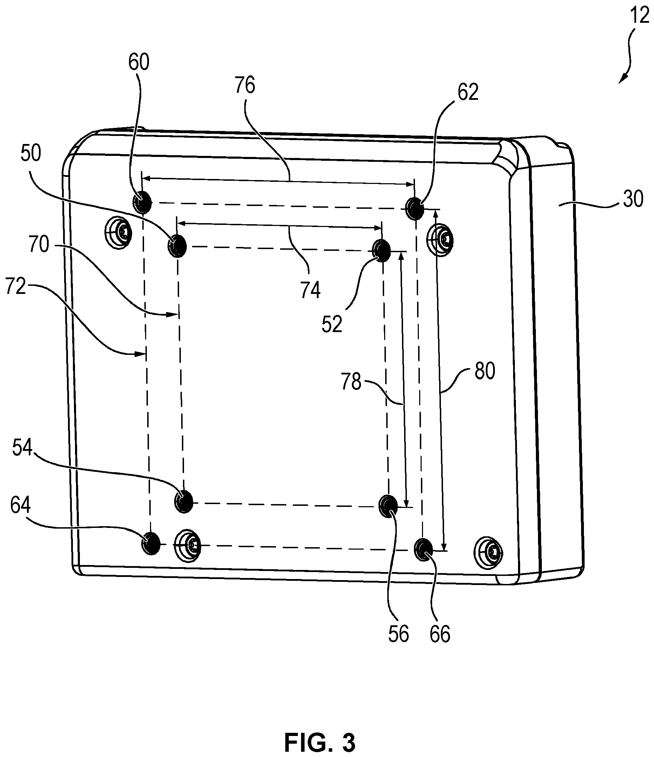

In Figur 3 ist eine schematische, perspektivische Darstellung der ersten Adaptereinheit 12 mit Blick auf eine der Vorderseite gegenüberliegenden Rückseite dargestellt. Die Adaptereinheit 12 weist an dieser Rückseite acht Bohrungen 50 bis 66 auf, die jeweils ein M4, M5, M6 oder M8 Innengewinde haben. Diese Innengewinde haben vorzugsweise eine Gewindelänge zwischen 8 mm und 12 mm, insbesondere eine Gewindelänge von 10 mm.

Die Bohrungen 50 bis 66 sind derart angeordnet und ausgebildet, dass über sie die erste Adaptereinheit 12 mit Hilfe von Schrauben an einer VESA-Halterung 20, 22 befestigt werden kann. Hierzu sind jeweils vier der Bohrungen 50 bis 66 derart angeordnet, dass sie die Ecken eines Rechtecks 70, 72 bilden, wobei die durch die Bohrungen 50 bis 66 aufgespannten Rechtecke jeweils eine erste Kantenlänge 74, 76 und eine zweite Kantenlänge 78, 80 haben. Die erste Kantenlänge 74, 76 hat insbesondere einen Wert von 75 mm, 100 mm, 200 mm, 400 mm, 600 mm oder 800 mm. Die zweite Kantenlänge 78, 80 hat jeweils insbesondere einen Wert von 75 mm, 100 mm, 200 mm, oder 400 mm. Die beiden Rechtecke 70, 72 sind derart gewählt, dass sie nicht zusammenfallen.

Insbesondere haben die Rechtecke 70, 72 eine Abmessung von 75 x 75 mm, 100 x 100 mm, 200 x 100 mm, 200 x 200 mm, 400 x 200 mm, 400 x 400 mm, 600 x 200 mm, 600 x 400 mm oder 800 x 400 mm. Bei einer alternativen Ausführungsform der Erfindung kann die erste Adaptereinheit 12 auch lediglich vier als ein Rechteck 70, 72 angeordnete Bohrungen 50 bis 66 umfassen.

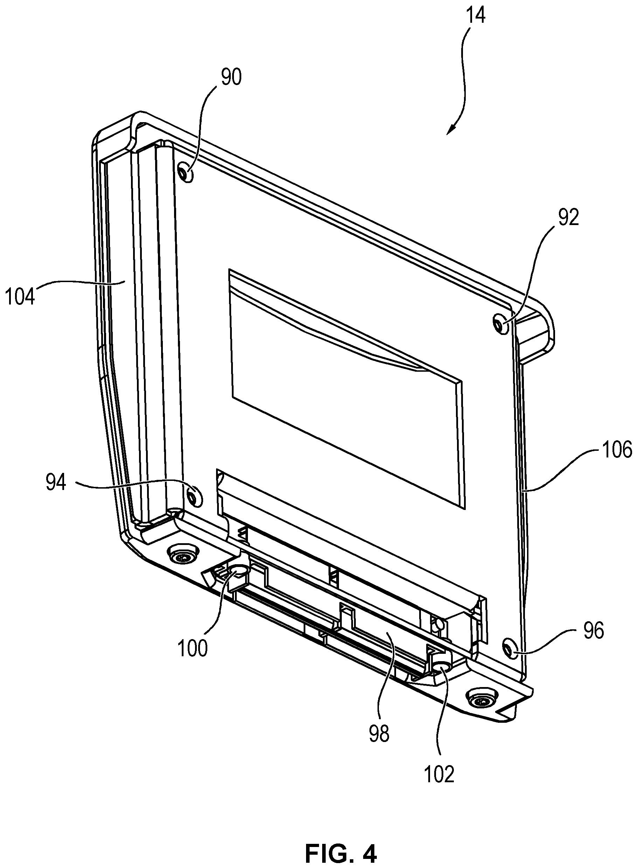

In Figur 4 ist eine schematische, perspektivische Darstellung der zweiten Adaptereinheit 14 gezeigt. Die zweite Adaptereinheit 14 weist vier Bohrungen 90 bis 96 auf, über die sie an dem Tablet-Computer 18 befestigbar ist. Die zweite Adaptereinheit 14 wird insbesondere über vier Schrauben oder Nieten an komplementär ausgebildeten Bohrungen des Tablet-Computers 18 befestigt.

Ferner weist die Adaptereinheit 14 mehrere Steckverbinder auf, von denen einer beispielhaft mit dem Bezugszeichen 98 bezeichnet ist. Die Steckverbinder 98 sind komplementär zu den Steckverbindern 38 der ersten Adaptereinheit 12 ausgebildet, so dass über die Steckverbinder 38, 98 eine Steckverbindung zwischen den beiden Adaptereinheiten 12, 14 hergestellt ist, wenn die zweite Adaptereinheit 14 mit der ersten Adaptereinheit 12 verbunden ist.

Ferner hat die zweite Adaptereinheit 14 zwei Öffnungen 100, 102, die komplementär zu den Stiften 42, 44 ausgebildet sind. Insbesondere haben die Öffnungen 100, 102 in etwa den gleichen Durchmesser wie die Stifte 42, 44.

In Figur 5 ist eine schematische, perspektivische Darstellung der Vorrichtung 10 in einem verbundenen Zustand gezeigt, bei dem die zweite Adaptereinheit 14 teilweise in dem Aufnahmebereich 31 des Aufnahmefachs 32 aufgenommen und somit mit der ersten Adaptereinheit 12 verbunden ist.

In dem verbundenen Zustand sind die Stifte 42, 44 mit den Öffnungen 100, 102 im Eingriff. Die Stifte 42, 44 greifen bereits während des Einschiebens der zweiten Adaptereinheit 14 in das Aufnahmefach 32 in die Öffnungen 100, 102 ein, so dass die Einschiebbewegung durch diesen Eingriff geführt wird. Somit wird sichergestellt, dass auch beim schnellen Einschieben der zweiten Adaptereinheit 14 in die erste Adaptereinheit 12 die beiden Adaptereinheiten 12, 14 derart relativ zueinander geführt sind, dass die Steckverbindung zwischen den Steckverbindern 38, 98 zuverlässig hergestellt wird. Insbesondere wird somit Beschädigungen der Steckverbinder 38, 98 vorgebeugt. Die Stifte 42, 44 sind an der dem dritten Begrenzungselement 28 abgewandten Seite insbesondere zugespitzt ausgebildet, so dass die Stifte 42, 44 zuverlässig in den Öffnungen 100, 102 eingeführt werden können.

Die zweite Adaptereinheit 14 weist in den Bereichen, an denen im verbundenen Zustand die Rückhalteelemente 34, 36 der ersten Adaptereinheit 12 angeordnet sind, jeweils eine Aussparung 104, 106 auf, die im verbundenen Zustand in Eingriff mit den Rückhalteelementen 34, 36 sind, so dass hierdurch auf einfache Weise ein Herausfallen der zweiten Adaptereinheit 14 aus der ersten Adaptereinheit 12 vermieden wird.

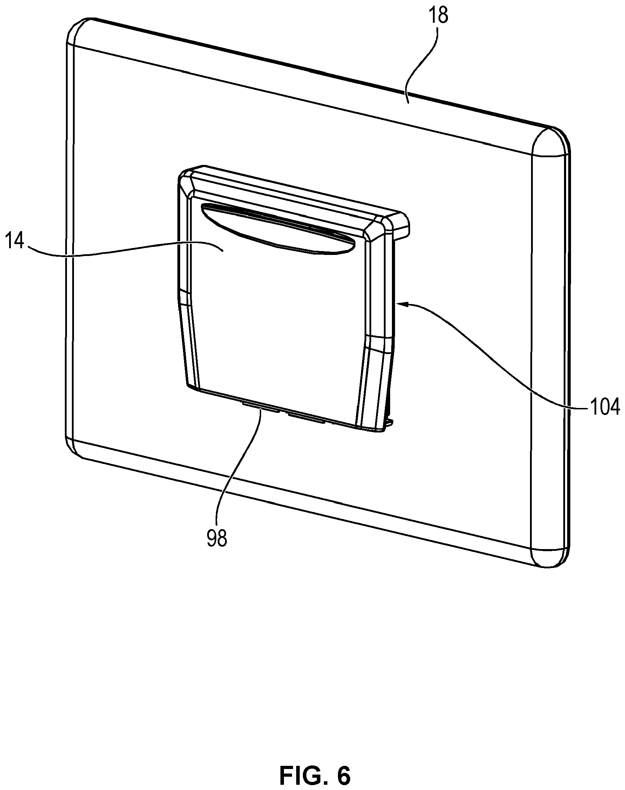

In Figur 6 ist eine schematische, perspektivische Darstellung der mit dem Tablet-Computer 18 verbundenen zweiten Adaptereinheit 14 gezeigt. Die zweite Adaptereinheit 14 ist auf der Rückseite des Tablet-Computers 18, d.h. derjenigen Seite, die dem Anzeigebereich des Tablet-Computers 18 abgewandt ist, angeordnet, so dass durch die Adaptereinheit 14 die Handhabung des Tablet-Computers 18 nicht beeinträchtigt wird.

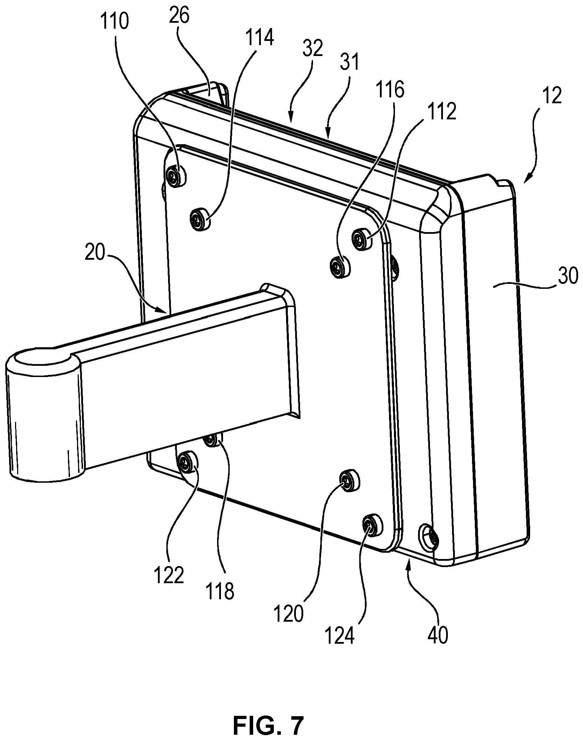

Figur 7 zeigt eine schematische, perspektivische Darstellung der VESA-Halterung 20, an die die erste Adaptereinheit 12 über acht Schrauben 110 bis 124 befestigt ist, die jeweils durch Bohrungen der VESA-Halterung 20 hindurch in die Bohrungen 50 bis 66 der ersten Adaptereinheit 12 eingreifen.

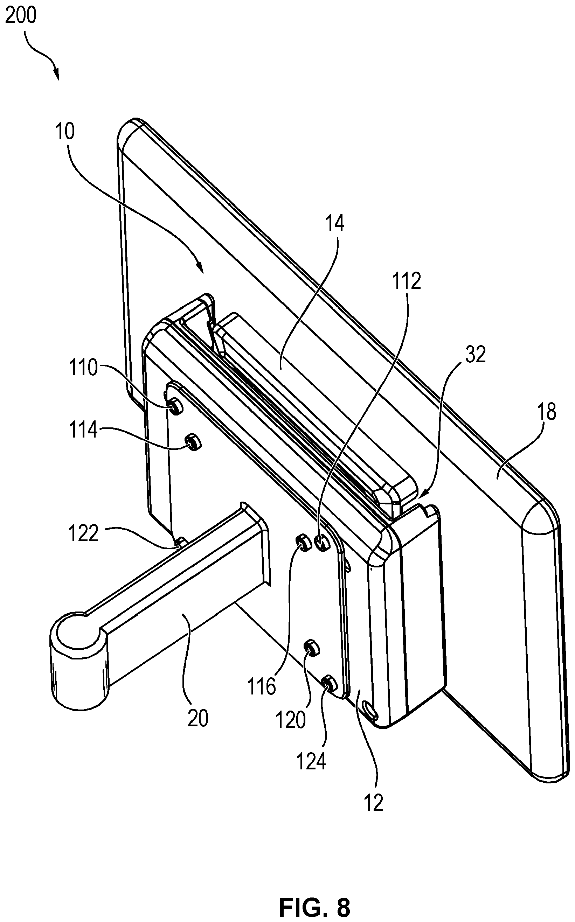

In Figur 8 ist eine schematische, perspektivische Darstellung einer Anordnung 200 zur Anzeige von Informationen dargestellt. Diese Anordnung 200 umfasst einen Tablet-Computer 18, eine VESA-Halterung 20 und eine Vorrichtung 10 zur Befestigung des Tablet-Computers 18 an der VESA-Halterung 20. Die Vorrichtung 10 ist entsprechend der in Zusammenhang mit den Figuren 1 bis 5 beschriebenen Vorrichtung 10 ausgebildet. Die Anordnung 200 wird insbesondere in Verbindung mit Kassensystemen eingesetzt, wobei die Halterung 20 ursprünglich für die Befestigung eines Flachbildschirms des Kassensystems dient.

Durch die Vorrichtung 10 wird erreicht, dass anstelle des Flachbildschirms auf einfache Weise ein Tablet-Computer 18 an der VESA-Halterung 20 befestigt werden kann, so dass der Flachbildschirm durch den Tablet-Computer 18 ersetzt werden kann. Insbesondere kann somit auf weitere Eingabegeräte, beispielsweise eine Tastatur und/oder eine Computer-Maus, verzichtet werden.

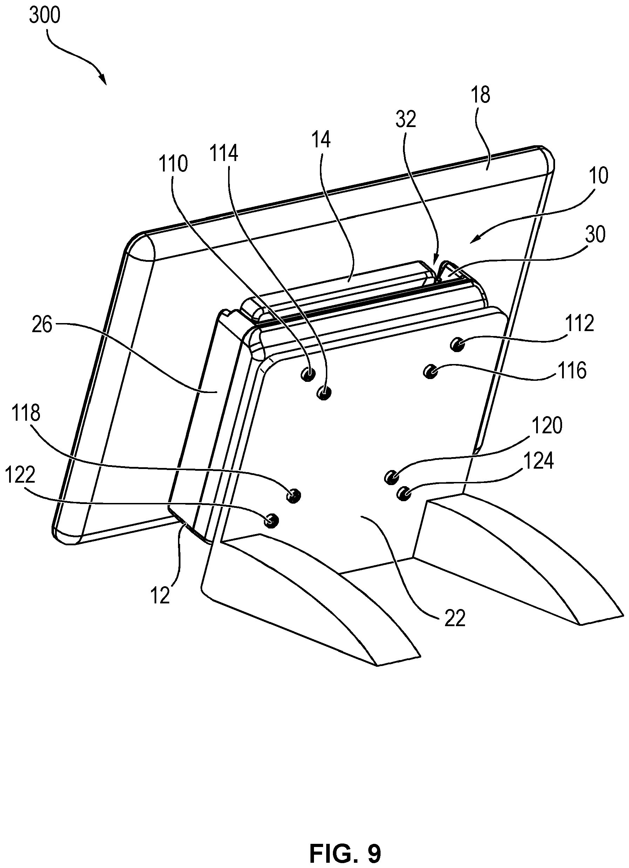

In Figur 9 ist eine schematische, perspektivische Darstellung einer weiteren Anordnung 300 zur Anzeige von Informationen bekannt, die, wie auch die Anordnung 200, einen Tablet-Computer 18, die Vorrichtung 10 und eine VESA-Halterung 22 umfasst, wobei die VESA-Halterung 22 bei der Anordnung 300 als Standhalterung zum Aufstellen des Tablet-Computers 18 auf einem Tisch oder Ähnlichem ausgebildet ist.

### Bezugszeichenliste

- 10: Vorrichtung
- 12, 14: Adaptereinheit
- 18: Tablet-Computer
- 20, 22: VESA-Halterung
- 24 bis 30: Begrenzungselement
- 31: Aufnahmebereich
- 32: Aufnahmefach
- 34, 36: Rückhalteelement
- 38, 98: Steckverbinder
- 40: Seite
- 42, 44: Stift
- 50 bis 66: Bohrung
- 70, 72: Rechteck
- 74 bis 80: Kantenlänge
- 90 bis 96: Bohrung
- 100, 102: Öffnung
- 104, 106: Aussparung
- 110 bis 124: Schraube
- 200, 300: Anordnung
- P1, P2: Richtung

## Patentansprüche

1. Vorrichtung zum Befestigen eines Tablet-Computers an einer standardisierten Halterung für Flachbildschirme,
mit einer fest mit der Halterung (20, 22) verbindbaren ersten Adaptereinheit (12), und
mit einer fest mit dem Tablet-Computer (18) verbindbaren zweiten Adaptereinheit (14),
wobei die erste Adaptereinheit (12) eine Aufnahmeeinheit (32) umfasst, in der die zweite Adaptereinheit (14) zum Herstellen einer lös- und wiederherstellbaren Verbindung zwischen der ersten Adaptereinheit (12) und der zweiten Adaptereinheit (14) zumindest teilweise aufnehmbar ist,
und wobei die Aufnahmeeinheit (32) in Form eines Aufnahmefaches ausgebildet ist, in das die zweite Adaptereinheit (14) zum Herstellen der lös- und wiederherstellbaren Verbindung zumindest teilweise einschiebbar ist,
wobei die Aufnahmeeinheit (32) an einer erste Seite der ersten Adaptereinheit (12) angeordnet ist,
wobei die erste Adaptereinheit (12) an einer der ersten Seite gegenüberliegenden zweite Seite mindestens vier Bohrungen (50 bis 66) mit jeweils einem Innengewinde zum Anschrauben der ersten Adaptereinheit (12) an die Halterung (20 ,22) umfasst,
wobei die Bohrungen (50 bis 66) derart angeordnet sind, dass die erste Adaptereinheit (12) an einer VESA-Halterung (20, 22) anschraubbar ist,
wobei das Aufnahmefach (32) ein erstes Begrenzungselement (24) umfasst, auf dem die zweite Adaptereinheit (14) beim Einschieben in das Aufnahmefach (32) zumindest teilweise gleitet, wobei das Aufnahmefach (32) ein zweites Begrenzungselement (26), ein drittes Begrenzungselement (28) und ein viertes Begrenzungselement (30) umfasst, die an drei verschiedenen Seiten des ersten Begrenzungselements (24) angeordnet sind, wobei das erste Begrenzungselement (24), das zweite Begrenzungselement (26), das dritte Begrenzungselement (28) und das vierte Begrenzungselement (30) einen Aufnahmebereich (31) begrenzen, in dem die zweite Adaptereinheit (14) zumindest teilweise aufgenommen ist, wenn sie in das Aufnahmefach (32) eingeschoben ist, und wobei das Aufnahmefach (32) mindestens ein Rückhalteelement (34, 36) zum Verhindern des Herausfallens der zweiten Adaptereinheit (14) aus dem Aufnahmebereich (32) umfasst, und
wobei das erste Begrenzungselement (24) mindestens eine längliches Auflageelement umfasst, auf dem die zweite Adaptereinheit (14) beim Einschieben gleitet.

2. Vorrichtung (10) nach Anspruch 1, wobei das zweite Begrenzungselement (26), das dritte Begrenzungselement (28) und das vierte Begrenzungselement (30) wandartig ausgebildet sind, wobei das zweite Begrenzungselement (26), das dritte Begrenzungselement (28) und das vierte Begrenzungselement (30) jeweils orthogonal zum ersten Begrenzungselement (24) angeordnet sind, und wobei das zweite Begrenzungselement (26) und das vierte Begrenzungselement (30) jeweils orthogonal zum dritten Begrenzungselement (28) angeordnet sind.

3. Vorrichtung (10) nach einem der vorhergehenden Ansprüche, wobei die zweite Adaptereinheit (14) ein Aussparung (104, 106) aufweist, in die das Rückhalteelement (34, 36) eingreift, wenn die zweite Adaptereinheit (14) in das Aufnahmefach (32) eingeschoben ist.

4. Vorrichtung (10) nach einem der vorhergehenden Ansprüche, wobei die Aufnahmeeinheit (32) einen ersten Steckverbinder (38) umfasst, wobei die zweite Adaptereinheit (14) einen komplementär zum ersten Steckverbinder (38) ausgebildeten zweiten Steckverbinder (98) umfasst, und wobei zwischen dem ersten Steckverbinder (38) und dem zweiten Steckverbinder (98) eine Steckverbindung hergestellt ist, wenn die zweite Adaptereinheit (14) in der Aufnahmeeinheit (32) aufgenommen ist.

5. Vorrichtung (10) nach Anspruch 4, wobei die erste Adaptereinheit (12) mindestens einen mit dem ersten Steckverbinder (38) verbunden dritten Steckverbinder zum Anschließen eines Netzkabels zur Stromversorgung des Tablet-Computers (18) und/oder zum Anschließen eines Peripheriegerätes an den Tablet-Computer (18) umfasst.

6. Vorrichtung (10) nach Anspruch 4 oder 5, wobei die zweite Adaptereinheit (14) eine Datenschnittstelle umfasst, über die der zweite Steckverbinder (98) zum Übertragen von Daten und/oder elektrischer Energie mit dem Tablet-Computer (18) verbindbar ist.

7. Vorrichtung (10) nach einem der vorhergehenden Ansprüche, wobei im Aufnahmefach (32) mindestens ein Stift (42, 44) angeordnet ist, wobei die zweite Adaptereinheit (14) mindestens eine komplementär zum Stift (42, 44) ausgebildete Öffnung (100, 102) umfasst, und wobei der Stift (42, 44) während des Einschiebens der zweiten Adaptereinheit (14) in das Aufnahmefach (32) in die Öffnung (100, 102) eingreift.

8. Vorrichtung (10) nach Anspruch 7, wobei der Stift (42, 44) eine Nut aufweist, wobei die zweite Adaptereinheit (14) ein Eingriffselement und eine Verstelleinheit zum Verstellen des Eingriffselements umfasst, wobei in einem ersten Betriebszustand das Eingriffselement in die Nut eingreift, und wobei in einem zweiten Betriebszustand das Eingriffselement außerhalb der Nut angeordnet ist.

9. Vorrichtung (10) nach einem der vorhergehenden Ansprüche, wobei die Bohrungen (50 bis 66) in Form eines Rechtecks (70, 72) mit einer voreingestellten ersten Kantenlänge (74, 76) und einer voreingestellten zweiten Kantenlänge (78, 80) angeordnet sind, wobei die erste Kantenlänge (74, 76) insbesondere 75 mm, 100 mm, 200 mm, 400 mm, 600 mm oder 800 mm und/oder die zweite Kantenlänge (78, 80) insbesondere 75 mm, 100 mm, 200 mm oder 400 mm beträgt.

10. Anordnung zum Anzeigen von Informationen,
mit einer standardisierten Halterung (20, 22) zur Befestigung von Flachbildschirmen,
einem Tablet-Computer (18), und
mit einer Vorrichtung (10) nach einem der Ansprüche 1 bis 9;
wobei die erste Adaptereinheit (12) fest mit der Halterung (20, 22) verbunden ist, und
wobei die zweite Adaptereinheit (14) fest mit dem Tablet-Computer (18) verbunden ist.

## Claims

1. Apparatus for fastening a tablet computer to a standardized mount for flat screens,
comprising a first adapter unit (12) which can be fixedly connected to the mount (20, 22), and
comprising a second adapter unit (14) which can be fixedly connected to the tablet computer (18),
wherein the first adapter unit (12) comprises a receiving unit (32) in which the second adapter unit (14) can be at least partially received for the purpose of establishing a connection, which can be released and re-established, between the first adapter unit (12) and the second adapter unit (14),
and wherein the receiving unit (32) is designed in the form of a receiving compartment into which the second adapter unit (14) can be at least partially inserted for the purpose of establishing the connection which can be released and re-established,
wherein the receiving unit (32) is arranged on a first side of the first adapter unit (12),
wherein the first adapter unit (12), on a second side which is situated opposite the first side, comprises at least four bores (50 to 66) with in each case an internal thread for screwing the first adapter unit (12) to the mount (20, 22),
wherein the bores (50 to 66) are arranged in such a way that the first adapter unit (12) can be screwed to a VESA mount (20, 22),
wherein the receiving compartment (32) comprises a first delimiting element (24) on which the second adapter unit (14) at least partially slides as it is inserted into the receiving compartment (32),
wherein the receiving compartment (32) comprises a second delimiting element (26), a third delimiting element (28) and a fourth delimiting element (30), which delimiting elements are arranged on three different sides of the first delimiting element (24), wherein the first delimiting element (24), the second delimiting element (26), the third delimiting element (28) and the fourth delimiting element (30) delimit a receiving region (31) in which the second adapter unit (14) is at least partially received when it is inserted into the receiving compartment (32), and
wherein the receiving compartment (32) comprises at least one restraining element (34, 36) for preventing the second adapter unit (14) from falling out of the receiving region (32), and
wherein the first delimiting element (24) comprises at least one elongate support element on which the second adapter unit (14) slides as it is inserted.

2. Apparatus (10) according to Claim 1, wherein
the second delimiting element (26), the third delimiting element (28) and the fourth delimiting element (30) are of wall-like design,
wherein the second delimiting element (26), the third delimiting element (28) and the fourth delimiting element (30) are each arranged orthogonally in relation to the first delimiting element (24), and
wherein the second delimiting element (26) and the fourth delimiting element (30) are each arranged orthogonally in relation to the third delimiting element (28).

3. Apparatus (10) according to either of the preceding claims,
wherein the second adapter unit (14) has a cutout (104, 106) into which the restraining element (34, 36) engages when the second adapter unit (14) is inserted into the receiving compartment (32).

4. Apparatus (10) according to one of the preceding claims,
wherein the receiving unit (32) comprises a first plug-in connector (38),
wherein the second adapter unit (14) comprises a second plug-in connector (98) which is designed in a complementary manner in relation to the first plug-in connector (38), and
wherein a plug-in connection is established between the first plug-in connector (38) and the second plug-in connector (98) when the second adapter unit (14) is received in the receiving unit (32).

5. Apparatus (10) according to Claim 4,
wherein the first adapter unit (12) comprises at least one third plug-in connector, which is connected to the first plug-in connector (38), for the purpose of connecting a mains cable for supplying power to the tablet computer (18) and/or for the purpose of connecting a peripheral device to the tablet computer (18).

6. Apparatus (10) according to Claim 4 or 5,
wherein the second adapter unit (14) comprises a data interface via which the second plug-in connector (98) can be connected to the tablet computer (18) for the purpose of transferring data and/or electrical energy.

7. Apparatus (10) according to one of the preceding claims,
wherein at least one pin (42, 44) is arranged in the receiving compartment (32),
wherein the second adapter unit (14) comprises at least one opening (100, 102) which is designed in a complementary manner in relation to the pin (42, 44), and wherein the pin (42, 44) engages into the opening (100, 102) as the second adapter unit (14) is inserted into the receiving compartment (32).

8. Apparatus (10) according to Claim 7,
wherein the pin (42, 44) has a groove,
wherein the second adapter unit (14) comprises an engagement element and an adjustment unit for adjusting the engagement element,
wherein the engagement element engages into the groove in a first operating state, and
wherein the engagement element is arranged outside the groove in a second operating state.

9. Apparatus (10) according to one of the preceding claims,
wherein the bores (50 to 66) are arranged in the form of a rectangle (70, 72) with a preset first edge length (74, 76) and a preset second edge length (78, 80), wherein the first edge length (74, 76) is, in particular, 75 mm, 100 mm, 200 mm, 400 mm, 600 mm or 800 mm and/or the second edge length (78, 80) is, in particular, 75 mm, 100 mm, 200 mm or 400 mm.

10. Arrangement for displaying information,
comprising a standardized mount (20, 22) for fastening flat screens,
a tablet computer (18), and
comprising an apparatus (10) according to one of Claims 1 to 9,
wherein the first adapter unit (12) is fixedly connected to the mount (20, 22), and
wherein the second adapter unit (14) is fixedly connected to the tablet computer (18).

## Revendications

1. Dispositif pour fixer un ordinateur tablette à un support normalisé pour écrans plats,
comprenant une première unité d'adaptation (12) pouvant être reliée à demeure au support (20, 22), et comprenant une deuxième unité d'adaptation (14) pouvant être reliée à demeure à l'ordinateur tablette (18),
la première unité d'adaptation (12) comprenant une unité d'accueil (32) dans laquelle peut être accueillie au moins partiellement la deuxième unité d'adaptation (14) en vue d'établir une liaison amovible et pouvant être rétablie entre la première unité d'adaptation (12) et la deuxième unité d'adaptation (14),
et l'unité d'accueil (32) étant réalisée sous la forme d'un compartiment d'accueil dans lequel la deuxième unité d'adaptation (14) peut être insérée au moins partiellement en vue d'établir la liaison amovible et pouvant être rétablie,
l'unité d'accueil (32) étant disposée au niveau d'un premier côté de la première unité d'adaptation (12),
la première unité d'adaptation (12) comportant au moins quatre trous (50 à 66) sur un deuxième côté à l'opposé du premier côté, ayant respectivement un filetage femelle servant à la fixation par vissage de la première unité d'adaptation (12) au support (20, 22), les trous (50 à 66) étant disposés de telle sorte que la première unité d'adaptation (12) peut être fixée par vissage à un support VESA (20, 22),
le compartiment d'accueil (32) comportant un premier élément de limitation (24) sur lequel la deuxième unité d'adaptation (14) coulisse au moins partiellement lors de l'insertion dans le compartiment d'accueil (32),
le compartiment d'accueil (32) comportant un deuxième élément de limitation (26), un troisième élément de limitation (28) et un quatrième élément de limitation (30) qui sont disposés au niveau de trois côté différents du premier élément de limitation (24), le premier élément de limitation (24), le deuxième élément de limitation (26), le troisième élément de limitation (28) et le quatrième élément de limitation (30) délimitant une zone d'accueil (31) dans laquelle la deuxième unité d'adaptation (14) est au moins partiellement accueillie lorsqu'elle est insérée dans le compartiment d'accueil (32), et
le compartiment d'accueil (32) comportant au moins un élément de retenue (34, 36) destiné à empêcher une chute de la deuxième unité d'adaptation (14) hors de la zone d'accueil (32), et
le premier élément de limitation (24) comportant au moins un élément d'appui allongé sur lequel coulisse la deuxième unité d'adaptation (14) lors de l'insertion.

2. Dispositif (10) selon la revendication 1, le deuxième élément de limitation (26), le troisième élément de limitation (28) et le quatrième élément de limitation (30) étant configurés à la manière de parois, le deuxième élément de limitation (26), le troisième élément de limitation (28) et le quatrième élément de limitation (30) étant respectivement disposés de manière orthogonale par rapport au premier élément de limitation (24) et le deuxième élément de limitation (26) et le quatrième élément de limitation (30) étant respectivement disposés de manière orthogonale par rapport au troisième élément de limitation (28).

3. Dispositif (10) selon l'une des revendications précédentes, la deuxième unité d'adaptation (14) possédant une cavité (104, 106) dans laquelle vient en prise l'élément de retenue (34, 36) lorsque la deuxième unité d'adaptation (14) est insérée dans le compartiment d'accueil (32).

4. Dispositif (10) selon l'une des revendications précédentes, l'unité d'accueil (32) comportant un premier connecteur à enfichage (38), la deuxième unité d'adaptation (14) comportant un deuxième connecteur à enfichage (98) configuré de façon complémentaire au premier connecteur à enfichage (38) et une connexion par enfichage étant établie entre le premier connecteur à enfichage (38) et le deuxième connecteur à enfichage (98) lorsque la deuxième unité d'adaptation (14) est accueillie dans l'unité d'accueil (32).

5. Dispositif (10) selon la revendication 4, la première unité d'adaptation (12) comportant au moins un troisième connecteur à enfichage relié au premier connecteur à enfichage (38) et servant au raccordement d'un câble réseau destiné à l'alimentation électrique de l'ordinateur tablette (18) et/ou servant au raccordement d'un périphérique à l'ordinateur tablette (18) .

6. Dispositif (10) selon la revendication 4 ou 5, la deuxième unité d'adaptation (14) comportant une interface de données par le biais de laquelle le deuxième connecteur à enfichage (98) peut être relié à l'ordinateur tablette (18) en vue de la transmission de données et/ou d'énergie électrique.

7. Dispositif (10) selon l'une des revendications précédentes, au moins une broche (42, 44) étant disposée dans le compartiment d'accueil (32), la deuxième unité d'adaptation (14) comportant au moins une ouverture (100, 102) configurée de façon complémentaire à la broche (42, 44) et la broche (42, 44) venant en prise dans l'ouverture (100, 102) pendant l'insertion de la deuxième unité d'adaptation (14) dans le compartiment d'accueil (32).

8. Dispositif (10) selon la revendication 7, la broche (42, 44) possédant une rainure, la deuxième unité d'adaptation (14) comportant un élément de mise en prise et une unité de positionnement servant à positionner l'élément de mise en prise, l'élément de mise en prise venant en prise dans la rainure dans un premier état opérationnel et, dans un deuxième état opérationnel, l'élément de mise en prise étant disposé en-dehors de la rainure.

9. Dispositif (10) selon l'une des revendications précédentes, les trous (50 à 66) étant disposés sous la forme d'un rectangle (70, 72) ayant une première longueur de bord (74, 76) préréglée et une deuxième longueur de bord (78, 80) préréglée, la première longueur de bord (74, 76) étant notamment de 75 mm, 100 mm, 200 mm, 400 mm, 600 mm ou 800 mm et/ou la deuxième longueur de bord (78, 80) étant notamment de 75 mm, 100 mm, 200 mm ou 400 mm.

10. Arrangement pour afficher des informations, comprenant un support (20, 22) normalisé destiné à la fixation d'écrans plats,
un ordinateur tablette (18), et
comprenant un dispositif (10) selon l'une des revendications 1 à 9 ;
la première unité d'adaptation (12) étant reliée à demeure au support (20, 22), et
la deuxième unité d'adaptation (14) étant reliée à demeure à l'ordinateur tablette (18).
